(19) Europäisches Patentamt / European Patent Office / Office européen des brevets

(11) **EP 1 748 511 A1**

(12) **EUROPEAN PATENT APPLICATION**
published in accordance with Art. 158(3) EPC

(43) Date of publication:
**31.01.2007 Bulletin 2007/05**

(51) Int Cl.:
**H01M 10/40** (2006.01)   **H01M 6/16** (2006.01)

(21) Application number: **05719788.1**

(22) Date of filing: **02.03.2005**

(86) International application number:
**PCT/JP2005/003473**

(87) International publication number:
**WO 2005/091421 (29.09.2005 Gazette 2005/39)**

(84) Designated Contracting States:
**DE FR**

(30) Priority: **23.03.2004   JP 2004084041**
**23.03.2004   JP 2004084881**

(71) Applicant: **Bridgestone Corporation**
**Tokyo 104-8340 (JP)**

(72) Inventors:
• **OHTSUKI, M.,**
**BRIDGESTONE CORP.,Tech. Ctr**
**Kodaira-shi, Tokyo 1878531 (JP)**
• **HORIKAWA, Y.,**
**BRIDGESTONE CORP., Tech. Ctr**
**Kodaira-shi, Tokyo 18788531 (JP)**
• **EGUCHI, S.,**
**BRIDGESTONE CORP., TechCtr**
**Kodaira-shi, Tokyo 1878531 (JP)**

(74) Representative: **Whalley, Kevin**
**Marks & Clerk**
**90 Long Acre**
**London WC2E 9RA (GB)**

(54) **ADDITIVE FOR NONAQUEOUS ELECTROLYTE OF BATTERY, NONAQUEOUS ELECTROLYTE FOR BATTERY AND BATTERY LOADED WITH NONAQUEOUS ELECTROLYTE**

(57)    This invention relates to an additive for a non-aqueous electrolyte in a battery having a sufficiently high boiling point and capable of ensuring a sufficient safety of an electrolyte even in an emergency such as the short-circuiting or the like without being vaporized in the use under high temperature and capable of giving excellent low-temperature characteristics, and more particularly to an additive for a non-aqueous electrolyte in a battery, which is composed of a phosphazene compound represented by the formula of $(NPX_2)_n$ (wherein Xs are independently a halogen element, and n is an integer of 3-15) and containing at least two kinds of halogen elements.

**Description**

TECHNICAL FIELD

This invention relates to an additive for a non-aqueous electrolyte in a battery, a non-aqueous electrolyte for a battery containing such an additive and a non-aqueous electrolyte battery comprising the same, and more particularly to a non-aqueous electrolyte battery being excellent in the safety and low-temperature characteristics.

BACKGROUND ART

Recently, batteries having a light weight, a long service life and a high energy density are demanded as a main power source or an auxiliary power source for electric automobiles and fuel cell vehicles, or as a power source for small-size electronics devices. For this demand, a non-aqueous electrolyte battery using lithium as an active substance for a negative electrode is known as one of the batteries having a high energy density because an electrode potential of lithium is lowest among metals and an electric capacity per unit volume is large, and many kinds of such a battery are actively studied irrespectively of primary battery and secondary battery, and a part thereof is practiced and supplied to markets. For example, the non-aqueous electrolyte primary batteries are used as a power source for cameras, electronic watches and various memory backups. Also, the non-aqueous electrolyte secondary batteries are used as a driving power source for note-type personal computers, mobile phones and the like, and further they are investigated to use as the main power source or the auxiliary power source for the electric automobiles and the fuel cell vehicles.

In these non-aqueous electrolyte batteries, since lithium as an active substance for a negative electrode violently reacts with a compound having an active proton such as water, alcohol or the like, the electrolyte used in these batteries is limited to an aprotic organic solvent such as ester compound, ether compound or the like.

Although the aprotic organic solvent is low in the reactivity with lithium as the active substance for the negative electrode, there is a high risk that if a large current flows violently, for example, in the short-circuiting or the like to cause the abnormal heat generation in the battery, the aprotic organic solvent is vaporized and decomposed to generate a gas, or the generated gas and heat cause explosion and ignition of the battery, or fire is caught by a spark generated in the short-circuiting or the like.

On the contrary, there is developed a non-aqueous electrolyte battery in which a phosphazene compound is added to the non-aqueous electrolyte to give non-combustibility, flame retardance or self-extinguishing property to the non-aqueous electrolyte, whereby the risk of igniting-firing the battery in an emergency such as the short-circuiting or the like is highly reduced. Among the phosphazene compounds, a cyclic phosphazene compound having two fluorine elements bonded to each phosphorus element in its molecule is very low in the viscosity as compared with a phosphazene compound having an organic group bonded to phosphorus element, so that it is further known that the viscosity of the non-aqueous electrolyte can be lowered to improve not only the discharge property at normal temperature of the battery but also the discharge property in the use under low temperature by adding such a cyclic phosphazene compound to the non-aqueous electrolyte (WO02/21631A and WO03/041197A).

DISCLOSURE OF THE INVENTION

However, the cyclic phosphazene compound having two fluorine elements bonded to each phosphorus element in its molecule is low in the boiling point, so that there is a possibility that such a phosphazene compound is vaporized in the use under high temperature. Moreover, there is a risk that since the phosphazene compound is vaporized earlier than the aprotic organic solvent when the temperature of the battery rises in the emergency such as short-circuiting or the like, the remaining aprotic organic solvent is vaporized and decomposed alone to generate a gas, or the generated gas and heat cause the explosion and ignition of the battery, and the aprotic organic solvent is fired by a spark generated in the short-circuiting, and so on.

It is, therefore, an object of the invention to solve the above-mentioned problems of the conventional techniques and to provide an additive for a non-aqueous electrolyte in a battery which is sufficiently high in the boiling point and can ensure a sufficient safety of an electrolyte even in the emergency such as the short-circuiting or the like without being vaporized in the use under high temperature and is capable of giving excellent low-temperature characteristics. Also, it is another object of the invention to provide a non-aqueous electrolyte for a battery comprising such an additive and a non-aqueous electrolyte battery comprising the non-aqueous electrolyte and being excellent in the safety and low-temperature characteristics.

The inventors have made various studies in order to achieve the above objects and discovered that a cyclic phosphazene compound having a specific structure has a sufficiently high boiling point, a sufficiently low freezing point and a very high oxygen index, and that the safety of the non-aqueous electrolyte can be sufficiently ensured even in the emergency such as the short-circuiting or the like by adding the cyclic phosphazene compound to the non-aqueous electrolyte without vaporizing this phosphazene compound in the use of the battery under high temperature and further the low-temperature characteristics of the battery can be improved, and as a result the invention has been accomplished.

That is, the additive for the non-aqueous electrolyte in the battery according to the invention is characterized by being composed of a phosphazene compound represented by the following formula (I):

$$(NPX_2)_n \qquad (I)$$

(wherein Xs are independently a halogen element, and n is an integer of 3-15) and containing at least two kinds of halogen elements.

In a preferable embodiment of the additive for the non-aqueous electrolyte in the battery according to the invention, the phosphazene compound contains fluorine and chlorine. In the phosphazene compound, it is further preferable that Xs in the formula (I) are independently fluorine or chlorine.

In another preferable embodiment of the additive for the non-aqueous electrolyte in the battery according to the invention, n in the formula (I) is 3-5. In this case, the viscosity of the phosphazene compound is sufficiently low, so that the viscosity of the non-aqueous electrolyte is not raised and the discharge property and the charge property of the battery can be sufficiently ensured.

The additive for the non-aqueous electrolyte in the battery according to the invention is more preferable to be composed of a phosphazene compound of the formula (I) in which n is 3 and one to three of six Xs is chlorine and the others are fluorine and/or a phosphazene compound of the formula (I) in which n is 4 and one to five of eight Xs is chlorine and the others are fluorine. Moreover, it is further preferable that the phosphazene compound contains at least two chlorine atoms in its molecule and each of the chlorine atoms is bonded to a different phosphorus atom. In this case, the low-temperature characteristics of the battery can be improved significantly because the freezing point of the phosphazene compound is particularly low.

In another preferable embodiment of the additive for the non-aqueous electrolyte in the battery according to the invention, the phosphazene compound has a freezing point of not higher than -5°C. Even in this case, the freezing point of the phosphazene compound is sufficiently low, so that the low-temperature characteristics of the battery can be improved significantly.

Also, the non-aqueous electrolyte for the battery according to the invention is characterized by comprising the above-described additive for the non-aqueous electrolyte in the battery, an aprotic organic solvent and a support salt.

In a preferable embodiment of the non-aqueous electrolyte for the battery according to the invention, a difference of a boiling point between the aprotic organic solvent and the additive for the non-aqueous electrolyte in the battery is not more than 25°C. In this case, the safety of the electrolyte in the emergency can be improved sufficiently.

Furthermore, the non-aqueous electrolyte battery according to the invention is characterized by comprising the above-described non-aqueous electrolyte for the battery, a positive electrode and a negative electrode, and is particularly excellent in the safety and the low-temperature characteristics.

According to the invention, there can be provided the additive for the non-aqueous electrolyte in the battery, which is composed of the cyclic phosphazene compound having the specific structure and is not vaporized in the use under high temperature and can ensure the sufficient safety of the electrolyte even in the emergency such as the short-circuiting or the like and improve the low-temperature characteristics of the battery significantly. Also, there can be provided the non-aqueous electrolyte for the battery, which comprises such an additive and has the sufficiently high safety and can improve the low-temperature characteristics of the battery significantly. Furthermore, there can be provided the non-aqueous electrolyte battery, which comprises the non-aqueous electrolyte and is excellent in the safety and the low-temperature characteristics.

BEST MODE FOR CARRYING OUT THE INVENTION

The invention will be described in detail below.

<Additive for non-aqueous electrolyte in battery>

The additive for the non-aqueous electrolyte in the battery according to the invention is characterized by being composed of the cyclic phosphazene compound represented by the formula (I) and containing at least two kinds of halogen elements. Since this phosphazene compound has a sufficiently high boiling point, it is not vaporized in the use under high temperature, and hence there is not a worry that the battery comprising the non-aqueous electrolyte containing the additive according to the invention is swollen or the like even in the use under high temperature. Also, the phosphazene compound has a sufficiently low freezing point, so that it exists as a liquid even at a low temperature, and hence the low-temperature characteristics of the battery can be improved by adding the phosphazene to the non-aqueous electrolyte of the battery. Furthermore, the phosphazene compound has a very high oxygen index, generates nitrogen gas and/or phosphate ester and so on in the emergency of the battery to render the non-aqueous electrolyte into non-combustibility, flame retardance or self-extinguishing property to thereby reduce the risk of ignition or the like of the battery significantly.

The phosphazene compound constituting the additive for the non-aqueous electrolyte in the battery according to the invention is represented by the formula (I) and contains at least two kinds of halogen elements. In the formula (I), Xs are independently a halogen element, and as the halogen element are mentioned fluorine, chlorine, bromine and the like. Among them, fluorine and chlorine are preferable. Also, the phosphazene compound is preferable to contain at least fluorine and chlorine in which all of Xs are fluorine or chlorine. Although the occurrence of halogen radical may come into problem in case of the compound containing a halogen element, the above phosphazene compound is stable in the non-aqueous electrolyte.

Moreover, n in the formula (I) is an integer of 3-15, preferably 3-5. When n is more than 5, the viscosity of the phosphazene compound becomes high, so that there is a tendency that the viscosity of the non-aqueous electrolyte is raised to raise an internal resistance of the battery or lower an electric conductivity of the electrolyte to thereby lower a discharge property and a charge property of the battery. The viscosity at 25 °C of the phosphazene compound is preferably not more than 10 mPa·s, more preferably not more than 5 mPa·s from a viewpoint that the discharge property and the charge property of the battery are sufficiently ensured. Moreover, the viscosity in the invention is determined by using a viscosity measuring meter (R-type viscometer Model RE500-SL, made by Toki Sangyo Co., Ltd.) and conducting the measurement at each revolution rate of 1 rpm, 2 rpm, 3 rpm, 5 rpm, 7 rpm, 10 rpm, 20 rpm and 50 rpm for 120 seconds to measure a viscosity under the revolution rate when an indication value is 50-60% as an analytical condition.

The limit oxygen index of the phosphazene compound is preferably not less than 30, more preferably not less than 40. The risk of igniting-firing the non-aqueous electrolyte can be highly reduced by adding the phosphazene compound having the limit oxygen index of not less than 40 to the non-aqueous electrolyte. The term "limit oxygen index" used herein means a value of a minimum oxygen concentration required for maintaining the combustion of the material under given test conditions defined in JIS K 7201 and represented by volume %, in which the higher the limit oxygen index, the lower the risk of ignition-firing.

The freezing point of the phosphazene compound is preferably not higher than -5°C, more preferably not higher than -20°C, and further preferably not higher than -30°C. The low-temperature characteristics of the battery can be surely improved by adding the phosphazene compound having a freezing point of not higher than -5°C to the non-aqueous electrolyte. Also, the non-aqueous electrolyte battery comprising the non-aqueous electrolyte added with such a phosphazene compound is particularly suitable as a battery for traveling (for HEV), because the low-temperature characteristics are excellent.

Among the above phosphazene compounds are particularly preferable a phosphazene compound of the formula (I) in which n is 3 and one to three of six Xs is chlorine and the others are fluorine and a phosphazene compound of the formula (I) in which n is 4 and one to five of eight Xs is chlorine and the others are fluorine from a viewpoint that the freezing point is low. Moreover, the freezing points of the phosphazene compounds in which Xs in the formula (I) are fluorine or chlorine are shown together with their boiling points and oxygen indexes in Table 1.

Table 1

| Value of n | Number of chlorines in all Xs | Number of fluorines in all Xs | Boiling point (°C) | Freezing point (°C) | Oxygen index (volume%) |
|---|---|---|---|---|---|
| 3 | 0 | 6 | 52 | 28 | 41.2 |
| 3 | 1 | 5 | 82 | -30 | 60.9 |
| 3 | 2 | 4 | 115 | -46 | 62.3 |
| 3 | 3 | 3 | 150 | -35 | 62.8 |
| 3 | 4 | 2 | 182 | 18 | 64.4 |
| 4 | 0 | 8 | 80 | 30 | 64.3 |
| 4 | 1 | 7 | 117 | -6 | 62.1 |
| 4 | 2 | 6 | 147 | -22 | 63.8 |
| 4 | 3 | 5 | 178 | -29 | 64.1 |
| 4 | 4 | 4 | 205 | -23 | 65.1 |
| 4 | 5 | 3 | 232 | -11 | 66.2 |

As seen from Table 1, in the phosphazene compound in which Xs in the formula (I) are fluorine or chlorine, although the boiling point becomes high as the number of chlorines increases (increase of molecular weight), the freezing point has a minimum value within a certain chlorine number range. When n is 3, the chlorine number of 1-3 is particularly preferable. When n is 4, the chlorine number of 2-4 is particularly preferable.

The phosphazene compound can be synthesized, for example, by a method wherein a commercially available phosphazene compound in which all Xs in the formula (I) are chlorine is used as a starting material and all chlorines are fluorinated with a fluorinating agent and then an alkoxy group, an amine group or the like is introduced into a target position to be substituted with chlorine and thereafter the chlorination is again conducted with a chlorinating agent such as HCl, phosgene or the like, a method wherein after equivalent weight of fluorine to be introduced into the commercial phosphazene compound in which all Xs in the formula (I) are chlorine is calculated, a necessary amount of a fluorinating agent is added, and so on. Moreover, these phosphazene compounds may be used alone or in a combination of two or more.

<Non-aqueous electrolyte for battery>

The non-aqueous electrolyte for the battery according to the invention is characterized by comprising the above-mentioned additive for the non-aqueous electrolyte in the battery, an aprotic organic solvent and a support salt.

The aprotic organic solvent used in the non-aqueous electrolyte for the battery of the invention is not particularly limited, but is preferable to be ether compounds, ester compounds and so on from a viewpoint that the viscosity of the electrolyte is suppressed to be low. Concretely, there are preferably mentioned 1,2-dimethoxyethane (DME), tetrahydrofuran, dimethyl carbonate (DMC), diethyl carbonate (DEC), diphenyl carbonate, ethylene carbonate (EC), propylene carbonate (PC), γ-butyrolactone (GBL), γ-valerolactone, ethyl methyl carbonate (EMC), methyl formate (MF) and so on. Among them, cyclic ester compounds such as propylene carbonate, γ-butyrolactone and the like, chain ester compounds such as dimethyl carbonate, ethyl methyl carbonate and the like, and chain ether compounds such as 1,2-dimethoxyethane and the like are more preferable as the aprotic organic solvent for the non-aqueous electrolyte of the primary battery. Also, cyclic ester compounds such as ethylene carbonate, propylene carbonate, γ-butyrolactone and the like, chain ester compounds such as dimethyl carbonate, ethyl methyl carbonate, diethyl carbonate and the like, and chain ether compounds such as 1,2-dimethoxyethane and the like are more preferable as the aprotic organic solvent for the non-aqueous electrolyte of the secondary battery. Particularly, cyclic ester compounds are preferable in a point that the dielectric constant is high and the solubility of the lithium salt or the like is excellent, while chain ester compounds and chain ether compounds are preferable in a point that they has a low viscosity and the viscosity of the electrolyte is made low. These aprotic organic solvents may be used alone or in a combination of two or more, but they are preferably used in a combination of two or more. The viscosity at 25 °C of the aprotic organic solvent is not particularly limited, but is preferably not more than 10 mPa·s (10 cP), more preferably not more than 5 mPa·s (5 cP).

In the non-aqueous electrolyte for the battery of the invention, the difference of the boiling point between the aprotic organic solvent and the additive for the non-aqueous electrolyte in the battery is preferable to be not more than 25°C. More specifically, the non-aqueous electrolyte for the battery of the invention is preferable to comprise at least one aprotic organic solvent and a support salt and further include the phosphazene compound of the formula (I) containing at least two kinds of halogen elements and having a difference of a boiling point from that of the respective aprotic organic solvent of not more than 25°C.

Although the phosphazene compound has a function of reducing the risk such as the firing the battery or the like as mentioned above, if the non-aqueous electrolyte containing the aprotic organic solvent does not contain the phosphazene compound having a boiling point near to that of the aprotic organic solvent, a range of temperature that the aprotic organic solvent does not coexist with the phosphazene compound is wide in either of a gas phase and a liquid phase, so that it is impossible to reduce the risk of igniting-firing the evaporated aprotic organic solvent or the aprotic organic solvent retained in the battery when the temperature of the battery rises abnormally. On the contrary, when the non-aqueous electrolyte comprises an aprotic organic solvent and a phosphazene compound having a boiling point near to that of the aprotic organic solvent, the aprotic organic solvent and the phosphazene compound vaporize at a temperature close to each other when the temperature of the battery rises abnormally, so that the aprotic organic solvent coexists with the phosphazene compound even when the aprotic organic solvent exists as a gas or a liquid, and as a result, the risk of igniting-firing the non-aqueous electrolyte is highly reduced.

Furthermore, when the non-aqueous electrolyte contains, for example, an aprotic organic solvent having a low boiling point and another aprotic organic solvent having a high boiling point, the phosphazene compound corresponding to the aprotic organic solvent having the low boiling point vaporizes at a temperature near to the vaporization of such a low-boiling aprotic organic solvent, so that it is possible to reduce the risk of igniting-firing the vaporized aprotic organic solvent. Even after the vaporization of the low-boiling aprotic organic solvent and the phosphazene compound having a boiling point near to that of the low-boiling aprotic organic solvent, the high-boiling aprotic organic solvent and the phosphazene compound having a boiling point near to that of the high-boiling aprotic organic solvent exist together in the electrolyte, so that it is possible to reduce the risk of igniting-firing the remaining high-boiling aprotic organic solvent.

In the non-aqueous electrolyte for the battery of the invention, it is preferable that according to the aprotic organic solvent to be used, the phosphazene compound (additive) having a boiling point near to that of the aprotic organic solvent is properly selected and used. The phosphazene compound represented by the formula (I) and containing at least two kinds of halogen elements can have a wide range of boiling point depending on the number of chlorines in its molecule and the value of n, so that the risk of igniting-firing the non-aqueous electrolyte in the emergency such as the short-circuiting or the like can be highly reduced by properly selecting the molecular structure of the phosphazene compound.

As the support salt used in the non-aqueous electrolyte for the battery of the invention is preferable a support salt serving as an ion source for a lithium ion. The support salt is not particularly limited, but preferably includes lithium salts such as $LiClO_4$, $LiBF_4$, $LiPF_6$, $LiCF_3SO_3$, $LiAsF_6$, $LiC_4F_9SO_3$, $Li(CF_3SO_2)_2N$, $Li(C_2F_5SO_2)_2N$ and so on. These support salts may be used alone or in a combination of two or more.

The concentration of the support salt in the non-aqueous electrolyte for the battery according to the invention is preferably 0.2-1.5 mol/L (M), more preferably 0.5-1 mol/L (M). When the concentration of the support salt is less than 0.2 mol/L (M), the electric conductivity of the electrolyte cannot be sufficiently ensured and troubles may be caused in the discharge property and the charge property of the battery, while when it exceeds 1.5 mol/L (M), the viscosity of the electrolyte rises and the sufficient mobility of the lithium ion cannot be ensured, and hence the sufficient electric conductivity of the electrolyte cannot be ensured and troubles may be caused in the discharge property and the charge property of the battery likewise the above-mentioned case.

In the non-aqueous electrolyte for the battery according to the invention, the content of the above phosphazene compound (that is, the content of the additive) is preferably not less than 1% by volume, more preferably not less than 5% by volume in a point that the safety of the electrolyte is improved, and it is preferably not less than 10% by volume, more preferably not less than 15% by volume in a point that the low-temperature characteristics of the battery are improved.

<Non-aqueous electrolyte battery>

The non-aqueous electrolyte battery of the invention comprises the above-mentioned non-aqueous electrolyte for the battery, a positive electrode and a negative electrode, and may be provided with other members usually used in the technical field of the non-aqueous electrolyte battery such as a separator and the like, if necessary. Moreover, the non-aqueous electrolyte battery of the invention may be a primary battery or a secondary battery.

Active materials for the positive electrode in the non-aqueous electrolyte battery of the invention partly differ between the primary battery and the secondary battery. For example, as the active material for the positive electrode of the non-aqueous electrolyte primary battery are preferably mentioned graphite fluoride $[(CF_x)_n]$, $MnO_2$ (which may be synthesized electrochemically or chemically), $V_2O_5$, $MoO_3$, $Ag_2CrO_4$, CuO, CuS, $FeS_2$, $SO_2$, $SOCl_2$, $TiS_2$ and the like. Among them, $MnO_2$ and graphite fluoride are preferable because they are high in the capacity and the safety, high in the discharge potential and excellent in the wettability to the electrolyte. On the other hand, as the active material for the positive electrode of the non-aqueous electrolyte secondary battery are preferably mentioned metal oxides such as $V_2O_5$, $V_6O_{13}$, $MnO_2$, $MnO_3$ and the like; lithium-containing composite oxides such as $LiCoO_2$, $LiNiO_2$, $LiMn_2O_4$, $LiFeO_2$, $LiFePO_4$ and the like; metal sulfides such as $TiS_2$, $MoS_2$ and the like; electrically conductive polymers such as polyaniline and the like. The lithium-containing composite oxide may be a composite oxide containing two or three transition metals selected from the group consisting of Fe, Mn, Co and Ni. In this case, the composite oxide is represented by $LiFe_xCo_y$-$Ni_{(1-x-y)}O_2$ (wherein $0 \leq x < 1$, $0 \leq y < 1$, $0 < x+y \leq 1$), $LiMn_xFe_yO_{2-x-y}$ or the like. Among them, $LiCoO_2$, $LiNiO_2$ and $LiMn_2O_4$ are particularly preferable because they are high in the capacity, high in the safety and excellent in the wettability to the electrolyte. These active materials for the positive electrode may be used alone or in a combination of two or more.

Active materials for the negative electrode in the non-aqueous electrolyte battery of the invention partly differ between the primary battery and the secondary battery. For example, as the active material for the negative electrode of the non-aqueous electrolyte primary battery are mentioned lithium metal itself, lithium alloys and the like. As a metal to be alloyed with lithium are mentioned Sn, Pb, Al, Au, Pt, In, Zn, Cd, Ag, Mg, Si and the like. Among them, Al, Zn, Mg, Si and Sn are preferable from a viewpoint of a greater amount of deposit and a toxicity. On the other hand, as the active material for the negative electrode of the non-aqueous electrolyte secondary battery are preferably mentioned lithium metal itself, an alloy of lithium with Al, In, Pb, Zn, Si or the like, a carbonaceous material such as graphite doped with lithium, and the like. Among them, the carbonaceous material such as graphite or the like is preferable and graphite is particularly preferable in a point that the safety is higher and the wettablility of the electrolyte is excellent. As the graphite are mentioned natural graphite, artificial graphite, mesophase carbon micro beads (MCMB) and so on, and also graphitizable carbon and non-graphitizable carbon are widely mentioned. These active materials for the negative electrode may be used alone or in a combination of two or more.

The positive electrode and the negative electrode may be mixed with an electrically conducting agent and a binding agent, if necessary. As the electrically conducting agent are mentioned acetylene black and the like, and as the binding agent are mentioned polyvinylidene fluoride (PVDF), polytetrafluoroethylene (PTFE), styrene-butadiene rubber (SBR), carboxymethyl cellulose (CMC) and the like. These additives may be compounded in the same compounding ratio as in the conventional case.

The forms of the positive and negative electrodes are not particularly limited, but can be properly selected from the well-known forms as the electrode. For example, there are mentioned a sheet form, a column form, a plate form, a spiral form and the like.

As the other member used in the non-aqueous electrolyte battery of the invention is mentioned a separator interposed between the positive and negative electrodes in the non-aqueous electrolyte battery and acting to prevent short-circuiting of current due to the contact between the electrodes. As a material of the separator are preferably mentioned materials capable of surely preventing the contact between the electrodes and passing or impregnating the electrolyte such as non-woven fabrics, thin-layer films and the like made of synthetic resin such as polytetrafluoroethylene, polypropylene, polyethylene, cellulose based resin, polybutylene terephthalate, polyethylene terephthalate or the like. Among them, a microporous film having a thickness of about 20-50 μm and made of polypropylene or polyethylene, and a film made of cellulose based resin, polybutylene terephthalate, polyethylene terephthalate or the like are particularly preferable. In the invention, various well-known members usually used in the battery can be preferably used in addition to the above-mentioned separator.

The form of the aforementioned non-aqueous electrolyte battery according to the invention is not particularly limited, but there are preferably mentioned various well-known forms such as coin type, button type, paper type, cylindrical type of polygonal form or spiral structure and so on. In case of the button type, the non-aqueous electrolyte battery can be made by preparing sheet-shaped positive and negative electrodes and sandwiching the separator between the positive and negative electrodes. Also, in case of the spiral structure, the non-aqueous electrolyte battery can be made by preparing a sheet-shaped positive electrode, sandwiching between collectors, piling the sheet-shaped negative electrode thereon and then winding them or the like.

<EXAMPLES>

The following examples are given in illustration of the invention and are not intended as limitations thereof.

<Synthesis of phosphazene compound>

(Synthesis Example 1)

In nitrobenzene as a solvent are mixed $(NPCl_2)_3$ and sodium fluoride, and the temperature is raised gradually from room temperature to 140°C over about one hour under a reduced pressure (15 kPa), during which a volatile fraction is obtained as a product.

As the thus obtained product is analyzed with a GC-MS, it is confirmed to be a mixture of a cyclic phosphazene compound of the formula (I) wherein n is 3 and all of six Xs are fluorine (a boiling point is 52°C, a freezing point is 28°C, and a viscosity at 25°C is 0.8 mPa·s), a cyclic phosphazene compound of the formula (I) wherein n is 3, one of six Xs is chlorine and five thereof are fluorine (a boiling point is 82°C, a freezing point is -30°C, and a viscosity at 25°C is 0.8 mPa·s), a cyclic phosphazene compound of the formula (I) wherein n is 3, two of six Xs are chlorine and four thereof are fluorine (a boiling point is 115°C, a freezing point is -46°C, and a viscosity at 25°C is 1.1 mPa·s), and a cyclic phosphazene compound of the formula (I) wherein n is 3, three of six Xs are chlorine and three thereof are fluorine (a boiling point is 150°C, a freezing point is -35°C, and a viscosity at 25°C is 1.3 mPa·s). Furthermore, the mixture is separated by fractional distillation to obtain four kinds of pure cyclic phosphazene compounds.

(Synthesis Example 2)

In nitrobenzene as a solvent are mixed $(NPCl_2)_4$ and potassium fluoride sulfite, and the temperature is raised gradually from room temperature to 180°C over about one hour under a reduced pressure (1 kPa), during which a volatile fraction is obtained as a product.

As the thus obtained product is analyzed with the GC-MS, it is confirmed to be a mixture of a cyclic phosphazene compound of the formula (I) wherein n is 4 and all of eight Xs are fluorine (a boiling point is 80°C, a freezing point is 30°C, and a viscosity at 25°C is 0.8 mPa·s), a cyclic phosphazene compound of the formula (I) wherein n is 4, one of eight Xs is chlorine and seven thereof are fluorine (a boiling point is 117°C, a freezing point is -6°C, and a viscosity at 25°C is 1.2 mPa·s), a cyclic phosphazene compound of the formula (I) wherein n is 4, two of eight Xs are chlorine and six thereof are fluorine (a boiling point is 147°C, a freezing point is -22°C, and a viscosity at 25°C is 1.5 mPa·s), a cyclic phosphazene compound of the formula (I) wherein n is 4, three of eight Xs are chlorine and five thereof are fluorine (a boiling point is 178°C, a freezing point is -29°C, and a viscosity at 25°C is 1.9 mPa·s), a cyclic phosphazene compound of the formula (I) wherein n is 4, four of eight Xs are chlorine and four thereof are fluorine (a boiling point is 205°C, a freezing point is -23°C, and a viscosity at 25°C is 2.3 mPa·s), and a cyclic phosphazene compound of the formula (I) wherein n is 4, five of eight Xs are chlorine and three thereof are fluorine (a boiling point is 232°C, a freezing point is -11°C, and a viscosity at 25°C is 2.8 mPa·s). Furthermore, the mixture is separated by fractional distillation to obtain six kinds of pure cyclic phosphazene compounds.

<Preparation of non-aqueous electrolyte for primary battery>

Then, a non-aqueous electrolyte is prepared by providing a mixed solution having a compounding recipe shown in Table 2 (consisting of an aprotic organic solvent(s) and a phosphazene compound(s)) and then dissolving $LiBF_4$ (support salt) in the mixed solution at a concentration of 0.75 mol/L (M). The safety and the limit oxygen index of the resulting non-aqueous electrolyte are measured and evaluated by the following methods. The results are shown in Table 2.

(1) Safety of the electrolyte

The safety of the non-aqueous electrolyte is evaluated from a combustion behavior of a flame ignited under an atmospheric environment measured according to a method arranging UL94HB method of UL (Underwriting Laboratory) standard. In this case, the ignitability, combustibility, carbide formation and phenomenon in secondary ignition are also observed. Concretely, a test piece of 127 mm × 12.7 mm is prepared by penetrating 1.0 mL of the above electrolyte into a non-combustible quartz fiber based on UL test standard. At this moment, "non-combustibility" means a property that a test flame does not ignite the test piece (combustion length: 0 mm), "flame retardance" means a property that the ignited flame does not arrive at a line of 25 mm and the ignition is not observed in the falling object, "self-extinguishing property" means a property that the ignited flame extinguishes at a line of 25-100 mm and the ignition is not observed in a falling object, and "combustion property" means a property that the ignited flame exceeds a line of 100 mm.

(2) Limit oxygen index of the electrolyte

The limit oxygen index of the electrolyte is measured according to JIS K 7201. Concretely, a test piece is made in the same manner as in the above safety test of the electrolyte, and the test piece is vertically attached to a test piece supporting member so as to position at a distance separated from an upper end portion of a combustion cylinder (inner diameter: 75 mm, height: 450 mm, equally filled with glass particles of 4 mm in diameter from a bottom to a thickness of 100±5 mm, and placed a metal net thereon) to not less than 100 mm. Then, oxygen (equal to or more than JIS K 1101) and nitrogen (equal to or more than grade 2 of JIS K 1107) are flown through the combustion cylinder and the test piece is ignited under a predetermined condition (heat source is Type 1, No. 1 of JIS K 2240) to examine combustion state. In this case, a total flow amount in the combustion cylinder is 11.4 L/min. This test is repeated three times, and an average value thereof is shown in Table 2. The oxygen index means a value of a minimum oxygen concentration required for maintaining combustion of a material and represented by a volume percentage. The limit oxygen index in the invention is calculated from minimum oxygen flow amount required for continuing the combustion of the test piece over 3 minutes or more or continuing the combustion after the firing so as to maintain the combustion length of not less than 50 mm and minimum nitrogen flow amount at this time according to the following equation:

$$\text{Limit oxygen index} = (\text{Oxygen flow amount}) / [(\text{Oxygen flow amount}) + (\text{Nitrogen flow amount})] \times 100 \ (\text{volume}\%)$$

<Preparation of non-aqueous electrolyte primary battery>

Then, a positive electrode pellet having a thickness of 500 $\mu$m is prepared by mixing and kneading $MnO_2$ (active material for a positive electrode), acetylene black (electrically conducting agent) and polyvinylidene fluoride (binding agent) at a ratio of 8:1:1 (mass ratio), pressing and pelletizing the kneaded mass onto a nickel foil having a thickness of 25$\mu$m (collector) and drying by heating (100-120°C). The positive electrode pellet thus obtained is punched out at 16 mm$\phi$ to form a positive electrode, and a lithium foil (thickness 0.5 mm) is punched out at 16 mm$\phi$ to form a negative electrode. The positive and negative electrodes are set opposite to each other through a cellulose separator [TF4030, made by Nippon Kodo Kami-kogyo Co., Ltd.], and the above-mentioned electrolyte is poured and sealed to prepare a non-aqueous electrolyte primary battery (lithium primary battery) of CR 2016 model. The low-temperature characteristics of the thus obtained battery are evaluated by the following method. The results are shown in Table 2.

(3) Low-temperature characteristics of the non-aqueous primary battery

A 0.2C discharge is conducted in an atmosphere of 25°C or -40°C at a lower limit voltage of 1.5V to measure a discharge capacity. A discharge capacity remaining ratio is calculated from the discharge capacity at 25°C and the discharge capacity at -40°C according to the following equation:

$$\text{Discharge capacity remaining ratio} = \text{discharge capacity} \; (-40°C) / \text{discharge capacity} \; (25°C) \times 100 \; (\%)$$

and is used as an indication of the low-temperature characteristics of the battery.

In Table 2, PC is propylene carbonate (boiling point: 242°C), DME is 1,2-dimethoxyethane (boiling point: 84°C) and GBL is γ-butyrolactone (boiling point: 204°C). Also, phosphazene A is a cyclic phosphazene compound of the formula (I) wherein n is 3, one of six Xs is chlorine and five thereof are fluorine (viscosity at 25°C: 0.8 mPa·s, boiling point: 82°C), phosphazene B is a cyclic phosphazene compound of the formula (I) wherein n is 3, two of six Xs are chlorine and four thereof are fluorine (viscosity at 25°C: 1.1 mPa·s, boiling point: 115°C), phosphazene C is a cyclic phosphazene compound of the formula (I) wherein n is 3, three of six Xs are chlorine and three thereof are fluorine (viscosity at 25°C: 1.3 mPa·s, boiling point: 150°C), phosphazene D is a cyclic phosphazene compound of the formula (I) wherein n is 4, one of eight Xs is chlorine and seven thereof are fluorine (viscosity at 25°C: 1.2 mPa·s, boiling point: 117°C), a phosphazene E is a cyclic phosphazene compound of the formula (I) wherein n is 4, two of eight Xs are chlorine and six thereof are fluorine (viscosity at 25°C: 1.5 mPa·s, boiling point: 147°C), a phosphazene F is a cyclic phosphazene compound of the formula (I) wherein n is 4, three of eight Xs are chlorine and five thereof are fluorine (viscosity at 25°C: 1.9 mPa·s, boiling point: 178°C), a phosphazene G is a cyclic phosphazene compound of the formula (I) wherein n is 4, four of eight Xs are chlorine and four thereof are fluorine (viscosity at 25°C: 2.3 mPa·s, boiling point: 205°C), and a phosphazene H is a cyclic phosphazene compound of the formula (I) wherein n is 4, five of eight Xs are chlorine and three thereof are fluorine (viscosity at 25°C: 2.8 mPa·s, boiling point: 232°C).

Table 2

| | Aprotic organic solvent | | | Phosphazene compound (Additive) | | | Safety of electrolyte | Limit oxygen index of electrolyte (vol%) | Low-temperature characteristics |
|---|---|---|---|---|---|---|---|---|---|
| | Kind of solvent | Amount (vol%) | Boiling point (°C) | Kind | Amount (vol%) | Boiling point (°C) | | | Discharge capacity remaining ratio (%) |
| Example 1 | PC | 50 | 242 | Phosphazene A | 10 | 82 | Non-combustibility | 26.2 | 86.5 |
| | DME | 40 | 84 | | | | | | |
| Example 2 | PC | 50 | 242 | Phosphazene B | 10 | 115 | Non-combustibility | 25.8 | 84.6 |
| | DME | 40 | 84 | | | | | | |
| Example 3 | PC | 50 | 242 | Phosphazene C | 10 | 150 | Non-combustibility | 25.8 | 83.8 |
| | DME | 40 | 84 | | | | | | |
| Example 4 | PC | 50 | 242 | Phosphazene D | 10 | 117 | Non-combustibility | 26.2 | 84.9 |
| | DME | 40 | 84 | | | | | | |
| Example 5 | PC | 50 | 242 | Phosphazene E | 10 | 147 | Non-combustibility | 25.8 | 83.2 |
| | DME | 40 | 84 | | | | | | |
| Example 6 | PC | 50 | 242 | Phosphazene F | 10 | 178 | Non-combustibility | 25.0 | 85.1 |
| | DME | 40 | 84 | | | | | | |
| Example 7 | PC | 50 | 242 | Phosphazene G | 10 | 205 | Non-combustibility | 25.0 | 84.7 |
| | DME | 40 | 84 | | | | | | |
| Example 8 | PC | 50 | 242 | Phosphazene H | 10 | 232 | Non-combustibility | 24.8 | 80.1 |
| | DME | 40 | 84 | | | | | | |

Table 2 (continued)

| | Aprotic organic solvent | | | Phosphazene compound (Additive) | | | Safety of electrolyte | Limit oxygen index of electrolyte (vol%) | Low-temperature characteristics |
|---|---|---|---|---|---|---|---|---|---|
| | Kind of solvent | Amount (vol%) | Boiling point (°C) | Kind | Amount (vol%) | Boiling point (°C) | | | Discharge capacity remaining ratio (%) |
| Example 9 | PC | 60 | 242 | Phosphazene A | 10 | 82 | Non-combustibility | 26.8 | 85.0 |
| | DME | 30 | 84 | | | | | | |
| Example 10 | PC | 60 | 242 | Phosphazene B | 10 | 115 | Non-combustibility | 26.4 | 86.2 |
| | DME | 30 | 84 | | | | | | |
| Example 11 | PC | 60 | 242 | Phosphazene C | 10 | 150 | Non-combustibility | 26.4 | 84.7 |
| | DME | 30 | 84 | | | | | | |
| Example 12 | GBL | 90 | 204 | Phosphazene E | 10 | 147 | Non-combustibility | 26.4 | 84.2 |
| Example 13 | GBL | 90 | 204 | Phosphazene F | 10 | 178 | Non-combustibility | 26.8 | 82.1 |
| Example 14 | GBL | 90 | 204 | Phosphazene G | 10 | 205 | Non-combustibility | 28.4 | 80.8 |
| Comparative Example 1 | PC | 50 | 242 | | | | Combustion property | 17.5 | 72.0 |
| | DME | 50 | 84 | | | | | | |
| Comparative Example 2 | PC | 60 | 242 | | | | Combustion property | 18.1 | 68.4 |
| | DME | 40 | 84 | | | | | | |
| Comparative Example 3 | GBL | 100 | 204 | | | | Combustion property | 18.4 | 71.5 |

As seen from Table 2, the non-aqueous electrolytes of the examples are high in the limit oxygen index and excellent in the safety, and also the non-aqueous electrolyte primary batteries of the examples are excellent in the low-temperature characteristics.

<Preparation of non-aqueous electrolyte for secondary battery>

Then, a mixed solution (consisting of an aprotic organic solvent(s) and a phosphazene compound(s)) is prepared according to a compounding recipe shown in Table 3, and $LiPF_6$ (support salt) is dissolved in the mixed solution at a concentration of 1 mol/L (M) to prepare a non-aqueous electrolyte. The safety and the limit oxygen index of the thus obtained non-aqueous electrolyte are evaluated according to the aforementioned methods. The results are shown in Table 3.

<Preparation of non-aqueous electrolyte secondary battery>

Then, 94 parts by mass of $LiMn_2O_4$ (an active material for a positive electrode) is added with 3 parts by mass of acetylene black (electrically conducting agent) and 3 parts by mass of polyvinylidene fluoride (binding agent) and kneaded with an organic solvent (mixed solvent of 50/50 mass% of ethyl acetate and ethanol), and thereafter the kneaded mass is applied onto an aluminum foil having a thickness of 25 $\mu$m (collector) with a doctor blade and dried in hot air (100-120°C) to prepare a positive electrode sheet having a thickness of 80 $\mu$m. A lithium foil having a thickness of 150 $\mu$m is piled on the thus obtained positive electrode sheet through a separator having a thickness of 25 $\mu$m (micro-porous film: made of polypropylene) and wound to prepare a cylinder type electrode. A length of the positive electrode in the cylinder type electrode is about 260 mm. The above-described electrolyte is poured into the cylinder type electrode and sealed to prepare a size AA lithium battery (non-aqueous electrolyte secondary battery). The cycle performance and low-temperature characteristics of the thus obtained battery are evaluated according to the following methods. The results are shown in Table 3.

(4) Cycle performance of the non-aqueous electrolyte secondary battery

The discharge-recharge of the battery are repeated 100 cycles in an atmosphere of 60°C under conditions of upper limit voltage: 4.3 V, lower limit voltage: 3.0 V, discharge current: 100 mA and recharge current: 50 mA. The capacity remaining ratio S is calculated from the initial discharge capacity and the discharge capacity after 100 cycles according to the following equation:

$$\text{Capacity remaining ratio } S = \text{discharge capacity after } 100 \text{ cycles / initial discharge capacity} \times 100 \ (\%)$$

and is used as an indication of the cycle performance of the battery.

(5) Low-temperature characteristics of the non-aqueous electrolyte secondary battery

The discharge-recharge of the battery are repeated 100 cycles in an atmosphere of 20°C or -10°C under conditions of upper limit voltage: 4.3 V, lower limit voltage: 3.0 V, discharge current: 100 mA and recharge current: 50 mA (provided that the recharge is conducted at 20°C), and a discharge capacity after 100 cycles is measured. The capacity remaining ratio L is calculated from the discharge capacity after 100 cycles at 20°C and the discharge capacity after 100 cycles at -10°C according to the following equation:

$$\text{Capacity remaining ratio } L = \text{discharge capacity } (-10°C) \text{ / discharge capacity } (20°C) \times 100 \ (\%)$$

and is used as an indication of the low-temperature characteristics of the battery.

In Table 3, EC is ethylene carbonate (boiling point: 238°C), DEC is diethyl carbonate (boiling point: 127°C), DMC is dimethyl carbonate (boiling point: 90°C), PC is propylene carbonate (boiling point: 242°C), EMC is ethyl methyl carbonate (boiling point: 108°C) and MF is methyl formate (boiling point: 32°C). Furthermore, phosphazenes A-H are

as mentioned above.
Table 3

| | Aprotic organic solvent | | | Phosphazene compound (Additive) | | | Safety of electrolyte | Limit oxygen index of electrolyte (vol%) | Cycle performance | Low-temperature characteristics |
|---|---|---|---|---|---|---|---|---|---|---|
| | Kind of solvent | Amount (vol%) | Boiling point (°C) | Kind | Amount (vol%) | Boiling point (°C) | | | Capacity remaining ratio S (%) | Capacity remaining ratio L (%) |
| Example 15 | EC | 50 | 238 | Phosphazene A | 10 | 82 | Non-combustibility | 26.8 | 95 | 72 |
| | DEC | 40 | 127 | | | | | | | |
| Example 16 | EC | 20 | 238 | Phosphazene A | 10 | 82 | Non-combustibility | 26.8 | 97 | 73 |
| | DMC | 70 | 90 | | | | | | | |
| Example 17 | EC | 50 | 238 | Phosphazene B | 10 | 115 | Non-combustibility | 26.4 | 95 | 72 |
| | DEC | 40 | 127 | | | | | | | |
| Example 18 | EC | 20 | 238 | Phosphazene B | 10 | 115 | Non-combustibility | 26.3 | 97 | 73 |
| | DMC | 70 | 90 | | | | | | | |
| Example 19 | EC | 50 | 238 | Phosphazene B | 6 | 115 | Non-combustibility | 28.4 | 95 | 72 |
| | DEC | 40 | 127 | Phosphazene G | 4 | 205 | | | | |
| Example 20 | EC | 20 | 238 | Phosphazene B | 8 | 115 | Non-combustibility | 28.2 | 97 | 73 |
| | DMC | 70 | 90 | Phosphazene H | 2 | 232 | | | | |
| Example 21 | EC | 20 | 238 | Phosphazene A | 10 | 82 | Non-combustibility | 27.2 | 97 | 75 |
| | PC | 20 | 242 | | | | | | | |
| | DMC | 50 | 90 | | | | | | | |
| Example 22 | EC | 20 | 238 | Phosphazene C | 10 | 150 | Non-combustibility | 26.8 | 96 | 75 |
| | EMC | 70 | 108 | | | | | | | |

14

Table 3 (continued)

| | Aprotic organic solvent | | | Phosphazene compound (Additive) | | | Safety of electrolyte | Limit oxygen index of electrolyte (vol%) | Cycle performance | Low-temperature characteristics |
|---|---|---|---|---|---|---|---|---|---|---|
| | Kind of solvent | Amount (vol%) | Boiling point (°C) | Kind | Amount (vol%) | Boiling point (°C) | | | Capacity remaining ratio S (%) | Capacity remaining ratio L (%) |
| Example 23 | EC | 20 | 238 | Phosphazene D | 10 | 117 | Non-combustibility | 27.0 | 96 | 75 |
| | EMC | 70 | 108 | | | | | | | |
| Example 24 | EC | 40 | 238 | Phosphazene A | 10 | 82 | Non-combustibility | 25.8 | 95 | 74 |
| | MF | 50 | 32 | | | | | | | |
| Example 25 | EC | 20 | 238 | Phosphazene E | 10 | 147 | Non-combustibility | 26.0 | 96 | 74 |
| | DMC | 70 | 90 | | | | | | | |
| Example 26 | EC | 20 | 238 | Phosphazene F | 10 | 178 | Non-combustibility | 26.0 | 95 | 78 |
| | EMC | 70 | 108 | | | | | | | |
| Comparative Example 4 | EC | 50 | 238 | | | | Combustion property | 16.9 | 86 | 51 |
| | DEC | 50 | 127 | | | | | | | |
| Comparative Example 5 | EC | 20 | 238 | | | | Combustion property | 18.2 | 56 | 57 |
| | PC | 20 | 242 | | | | | | | |
| | DMC | 60 | 90 | | | | | | | |
| Comparative Example 6 | EC | 30 | 238 | | | | Combustion property | 16.9 | 80 | 52 |
| | EMC | 70 | 108 | | | | | | | |

EP 1 748 511 A1

As seen from Table 3, the non-aqueous electrolytes of the examples are high in the limit oxygen index and excellent in the safety, and also the non-aqueous electrolyte secondary batteries of the examples have a sufficient cycle performance and are excellent in the low-temperature characteristics.

**Claims**

1. An additive for a non-aqueous electrolyte in a battery composed of a phosphazene compound represented by the following formula (I):

$$(NPX_2)_n \qquad (I)$$

(wherein Xs are independently a halogen element, and n is an integer of 3-15) and containing at least two kinds of halogen elements.

2. An additive for a non-aqueous electrolyte in a battery according to claim 1, wherein the phosphazene compound contains fluorine and chlorine.

3. An additive for a non-aqueous electrolyte in a battery according to claim 2, wherein Xs in the formula (I) are independently fluorine or chlorine.

4. An additive for a non-aqueous electrolyte in a battery according to claim 1, wherein n in the formula (I) is 3-5.

5. An additive for a non-aqueous electrolyte in a battery according to claim 3 or 4, wherein n in the formula (I) is 3, and one to three of six Xs is chlorine and the others are fluorine.

6. An additive for a non-aqueous electrolyte in a battery according to claim 3 or 4, wherein n in the formula (I) is 4, and one to five of eight Xs is chlorine and the others are fluorine.

7. An additive for a non-aqueous electrolyte in a battery according to claim 5 or 6, wherein the phosphazene compound contains at least two chlorine atoms in its molecule, and each of the chlorine atoms is bonded with a different phosphorus atom, respectively.

8. An additive for a non-aqueous electrolyte in a battery according to claim 1, wherein the phosphazene compound has a freezing point of not more than -5°C.

9. A non-aqueous electrolyte for a battery comprising an additive for a non-aqueous electrolyte in a battery as claimed in any one of claims 1-8, an aprotic organic solvent and a support salt.

10. A non-aqueous electrolyte for a battery according to claim 9, wherein a difference of a boiling point between the aprotic organic solvent and the additive for the non-aqueous electrolyte in the battery is not more than 25°C.

11. A non-aqueous electrolyte battery comprising a non-aqueous electrolyte for a battery as claimed in claim 9 or 10, a positive electrode and a negative electrode.

## INTERNATIONAL SEARCH REPORT

| | International application No. |
|---|---|
| | PCT/JP2005/003473 |

**A. CLASSIFICATION OF SUBJECT MATTER**
Int.Cl$^7$ H01M10/40, 6/16

According to International Patent Classification (IPC) or to both national classification and IPC

**B. FIELDS SEARCHED**

Minimum documentation searched (classification system followed by classification symbols)
Int.Cl$^7$ H01M10/40, 6/16

Documentation searched other than minimum documentation to the extent that such documents are included in the fields searched
Jitsuyo Shinan Koho          1922-1996    Jitsuyo Shinan Toroku Koho    1996-2005
Kokai Jitsuyo Shinan Koho    1971-2005    Toroku Jitsuyo Shinan Koho    1994-2005

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2003-77532 A  (Sanyo Electric Co., Ltd.),<br>14 March, 2003 (14.03.03),<br>Claims 1, 2<br>(Family: none) | 1-11 |
| A | JP 5-74467 A  (Showa Denko Kabushiki Kaisha),<br>26 March, 1993 (26.03.93),<br>Claim 1<br>(Family: none) | 1-11 |
| E,A | JP 2005-116424 A  (Japan Storage Battery Co., Ltd.),<br>28 April, 2005 (28.04.05),<br>Full text<br>(Family: none) | 1-11 |

| ☒ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>01 August, 2005 (01.08.05) | Date of mailing of the international search report<br>23 August, 2005 (23.08.05) |
|---|---|
| Name and mailing address of the ISA/<br>Japanese Patent Office | Authorized officer |
| Facsimile No. | Telephone No. |

Form PCT/ISA/210 (second sheet) (January 2004)

**INTERNATIONAL SEARCH REPORT**

| International application No. |
| --- |
| PCT/JP2005/003473 |

C (Continuation).    DOCUMENTS CONSIDERED TO BE RELEVANT

| Category* | Citation of document, with indication, where appropriate, of the relevant passages | Relevant to claim No. |
| --- | --- | --- |
| E,A | JP 2005-116306 A  (Japan Storage Battery Co., Ltd.), 28 April, 2005 (28.04.05), Full text (Family: none) | 1-11 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0221631 A
- WO 03041197 A